# EUROPÄISCHE PATENTSCHRIFT

(11) **EP 0 648 153 B1**
(45) Veröffentlichungstag und Bekanntmachung des Hinweises auf die Patenterteilung: **31.07.1996**
(21) Anmeldenummer: 94915113.8
(22) Anmeldetag: 25.04.1994
(51) Int. Cl.: B22D 19/06, B23D 65/00

(54) **VERFAHREN UND VORRICHTUNG ZUM AUFBRINGEN HARTEN WERKSTOFFS AUF ZÄHNE VON SCHNEIDWERKZEUGEN, INSBESONDERE SÄGEBLÄTTERN**
PROCESS AND DEVICE FOR APPLYING HARD MATERIAL TO THE TEETH OF CUTTING TOOLS, ESPECIALLY SAW BLADES
PROCEDE ET DISPOSITIF PERMETTANT D'APPLIQUER UN MATERIAU DUR SUR LES DENTS D'OUTILS COUPANTS, NOTAMMENT DES LAMES DE SCIE

(30) Priorität: 04.05.1993 DE 4314707
(43) Veröffentlichungstag der Anmeldung: 19.04.1995
(73) Patentinhaber: VOLLMER WERKE MASCHINENFABRIK GMBH, D-88400 Biberach (DE)
(72) Erfinder: HENSINGER, Bruno, D-88471 Laupheim-Obersulmetingen (DE); REICHENZER, Werner, D-88447 Warthausen (DE)
(74) Vertreter: Goetz, Rupert, Dipl.-Ing.
(86) Internationale Anmeldenummer: EP9401284
(87) Internationale Veröffentlichungsnummer: WO9425203

(56) Entgegenhaltungen:
- EP-A- 0 374 950
- DE-A- 1 558 378
- DE-A- 4 124 745

## Beschreibung

Die Erfindung betrifft ein Verfahren nach dem Oberbegriff des Patentanspruchs 1 sowie eine Vorrichtung nach dem Oberbegriff des Patentanspruchs 3.

Ein Verfahren und eine Vorrichtung dieser Gattung sind aus der EP 0 374 950 A2 bekannt. Dort ist vorgesehen, daß der in Richtung auf die Zahnspitze fortschreitende Druck beispielsweise mit einem Stempel auf die Kalotte aufgebracht wird, der mit einer Bewegungskomponente zur Zahnspitze hin auf die Kalotte abgesenkt wird. Alternativ kann ein Gas- oder Plasmastrahl, mit dem der harte Werkstoff geschmolzen worden ist, in Richtung zur Zahnspitze über die Kalotte hinweg bewegt werden, oder der geschmolzene Werkstoff kann mit einem längs des Zahnrückens zur Zahnspitze gerichteten Gasstrahl abgedrängt werden. Mit diesen Maßnahmen wird erreicht, daß der Formhohlraum vollständig vom geschmolzenen Werkstoff ausgefüllt wird, ohne daß es eines erheblichen Werkstoffüberschusses bedarf, der anschließend weggeschliffen werden müßte.

Der Erfindung liegt die Aufgabe zugrunde, die Formgenauigkeit und Haltbarkeit der vom geschmolzenen und anschließend erstarrten harten Werkstoff gebildeten Zähne weiter zu verbessern.

Die Aufgabe ist, soweit sie ein Verfahren betrifft, erfindungsgemäß ausgehend von einem Verfahren der eingangs beschriebenen Gattung dadurch gelöst, daß der geschmolzene Werkstoff abgekühlt und anschließend erneut bis zum Erreichen eines mindestens annähernd flüssigen Zustandes erhitzt wird, ehe der Druck auf die Kalotte aufgebracht wird.

Die Erfindung beruht auf der Erkenntnis, daß es für die Formgenauigkeit und Haltbarkeit von Zähnen oder Zahnteilen, die auf einen Grundkörper eines Schneidwerkzeugs, insbesondere Sägeblattes, aufgeschmolzen worden sind, besonders günstig ist, wenn man den geschmolzenen harten Werkstoff zunächst sich selbst überläßt, es also hinnimmt, daß er mit einer kalottenförmigen freien Oberfläche mehr oder weniger weitgehend erstarrt. Dies geschieht beispielsweise bei Verwendung von Stellit dadurch, daß man den geschmolzenen Werkstoff von seiner bei etwa 1200 bis 1300 °C liegenden Schmelztemperatur auf etwa 800 bis 700 °C abkühlen läßt. Dabei vergehen je nach Größe des Stellitauftrags ungefähr 3 bis 5 s. Bei dem anschließenden Erhitzen braucht die Schmelztemperatur nicht mehr erreicht zu werden, jedoch wird der aufgebrachte Werkstoff vorzugsweise über einen teigigen Zustand hinaus erhitzt, ehe der Druck zum Abflachen der Kalotte aufgebracht wird.

Mit dem Abkühlenlassen und erneuten Erhitzen des auf ein Schneidwerkzeug aufgebrachten harten Werkstoffs wird vor allem dessen Neigung, Lunker zu bilden, entgegengewirkt. Diese unerwartete und bisher nicht völlig erklärte Wirkung, die bei zahlreichen Versuchen beobachtet und bestätigt worden ist, verbessert die Schneidleistung erfindungsgemäß behandelter Werkzeuge erheblich. Dies gilt besonders für Sägeblätter, deren verhältnismäßig schmale Zähne durch bisher häufig aufgetretene Lunker erheblich geschwächt werden können und deshalb zum Ausbröckeln neigen.

Auf die Mittel, mit denen der Werkstoff wieder erhitzt wird, kommt es nicht entscheidend an; die zum Wiedererhitzen erforderliche Energie kann ebenso wie die zum ursprünglichen Schmelzen erforderliche beispielsweise elektroinduktiv oder mit einem Gas- oder Plasmabrenner zugeführt werden. Als besonders vorteilhaft hat es sich erwiesen, für beide Zwecke einen und denselben Plasmabrenner zu verwenden, der nach dem ursprünglichen Schmelzen des Werkstoffs für das genannte Zeitintervall von beispielsweise 2 bis 5 s abgestellt und dann erneut gezündet wird.

Der vorrichtungstechnische Teil der genannten Aufgabe ist im übrigen erfindungsgemäß ausgehend von einer Vorrichtung der eingangs beschriebenen Gattung dadurch gelöst, daß das Preßwerkzeug eine Platte ist, und Mittel vorhanden sind um diese Platte mindestens annähernd parallel zu sich selbst längs einer bogenförmigen, von der Kalotte aus gesehen konkaven Bahn in Richtung zur Zahnspitze, und über diese hinweg, zu bewegen.

Vorteilhafte Weiterbildungen der Erfindung ergeben sich aus den Unteransprüchen.

Ein Ausführungsbeispiel der Erfindung wird im folgenden anhand schematischer Zeichnungen mit weiteren Einzelheiten erläutert. Es zeigen:
- Fig. 1: eine Vorderansicht einer Vorrichtung zum Stellitieren von Sägezähnen,
- Fig. 2: den Schnitt II-II in Fig. 1,
- Fig. 3: einen teilweise als Schnitt III-III in Fig. 2 gezeichneten, vergrößerten Ausschnitt aus Fig. 1,

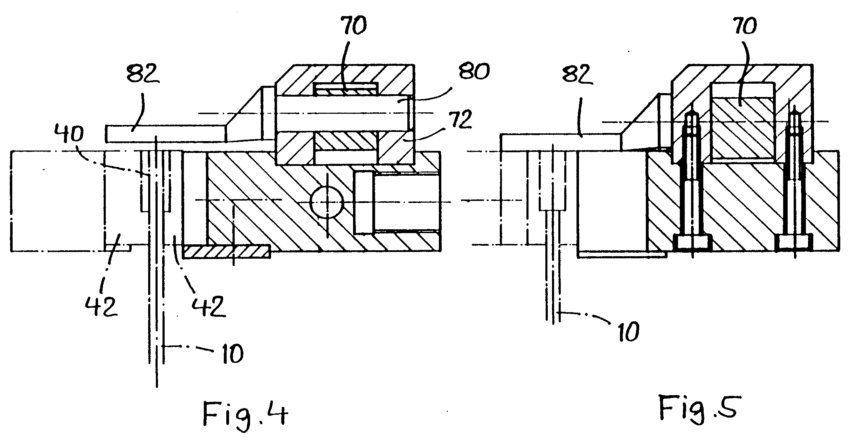

- Fig. 4: den Querschnitt IV-IV in Fig. 3,

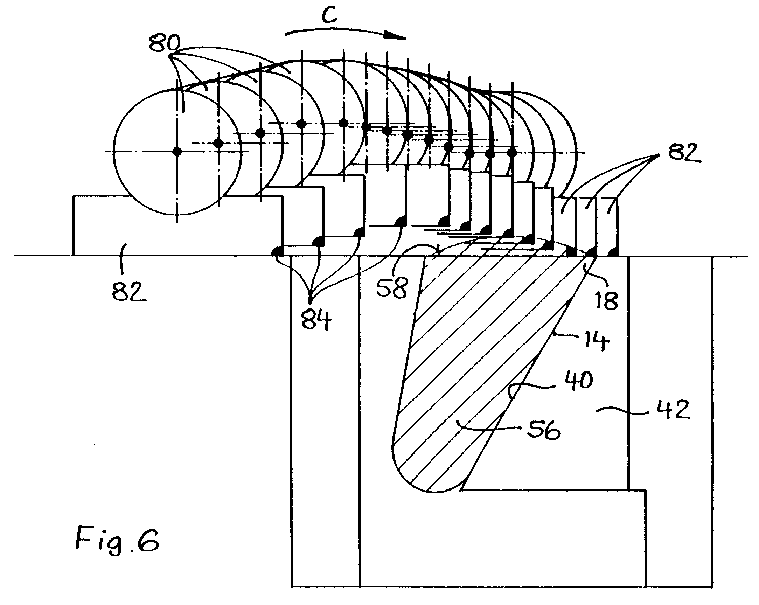

- Fig. 5: den Querschnitt V-V in Fig. 3 und
- Fig. 6: den Bewegungsablauf bei der Bearbeitung eines Sägezahns.

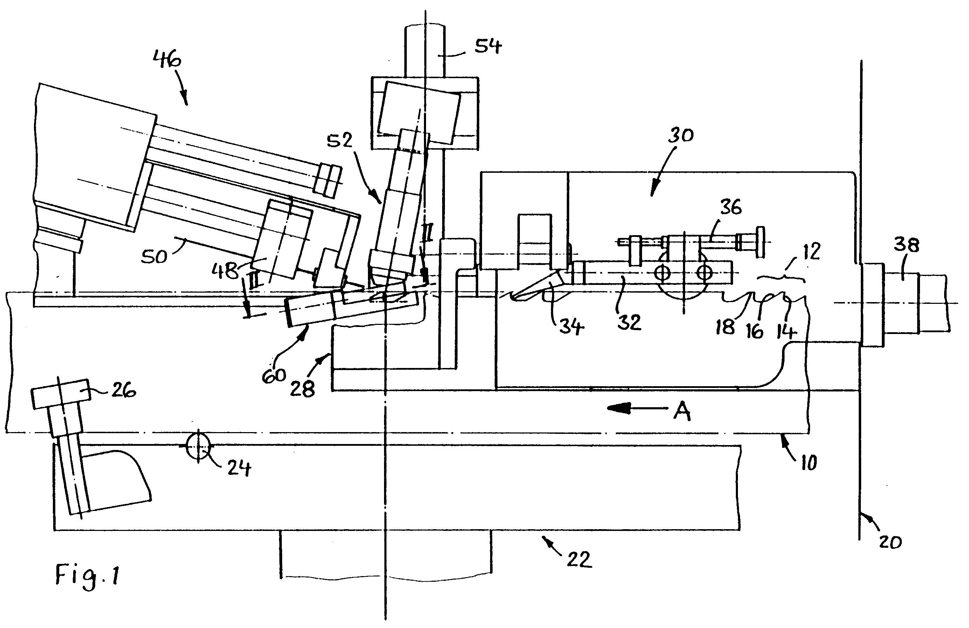

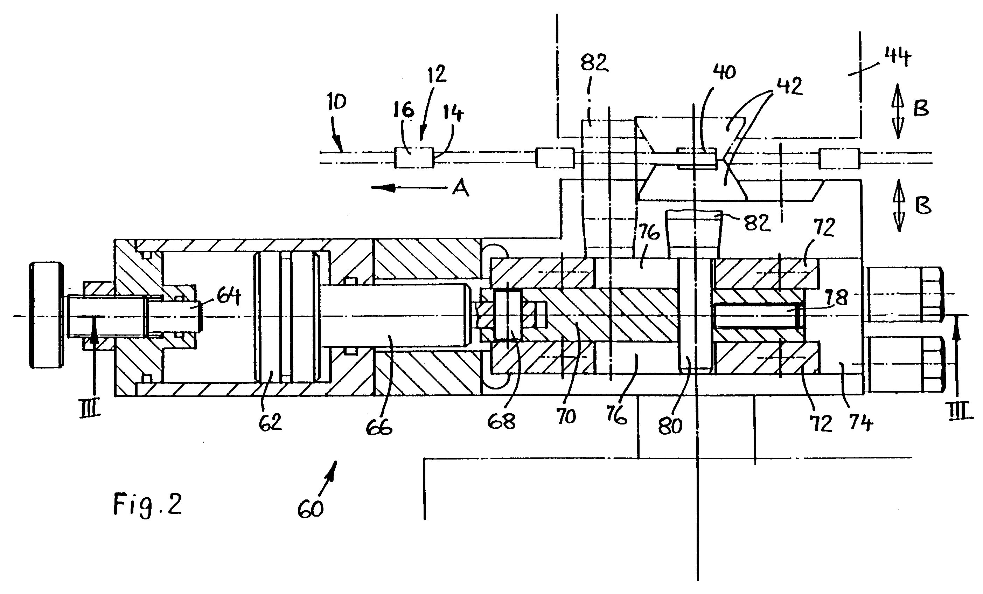

Die dargestellte Vorrichtung dient zum Stellitieren von an Sägeblättern 10 ausgebildeten, beispielsweise vorgestanzten Zähnen 12, deren Zahnbrust 14, Zahnrücken 16 und Zahnspitze 18 von einem Stellitauftrag gebildet werden sollen. In Fig.1 und 2 ist ein Sägeblatt 10 für eine Bandsäge angedeutet; die Vorrichtung läßt sich aber auch für das Stellitieren von Sägeblättern für Gattersägen sowie von Sägeblättern für Kreissägen umrüsten. Zu der Vorrichtung gehört ein kastenförmiges Gestell 20, an dessen dem Betrachter der Fig. 1 zugewandter Vorderseite eine Sägeblattführung 22 von üblicher Bauweise mit Stützrollen 24 und Niederhalterollen 26 sowie eine Klemmeinrichtung 28 und eine Vorschubeinrichtung 30 von ebenfalls üblicher Bauart angeordnet sind. Zur Vorschubeinrichtung 30 gehört im dargestellten Beispiel ein in Längsrichtung des Sägeblattes 10 hin- und herbeweglicher Schlitten 32 mit einer schwenkbaren Klinke 34, die bei jedem Arbeitszyklus hinter einer Zahnbrust 14 einrastet und das Sägeblatt 10 im Sinne der Pfeile A in Fig. 1 und 2 schrittweise um eine oder mehrere Zahnteilungen vorschiebt. Der Schlitten 32 ist über eine Gewindespindel 36, die eine Längseinstellung ermöglicht, mit der Kolbenstange einer Kolbenzylindereinheit 38 verbunden.

Bei jedem Arbeitszyklus wird ein Zahn 12 des Sägeblattes 10 in einen Formhohlraum 40 geschoben, der von zwei zur Sägeblattebene symmetrischen Formbacken 42 gebildet wird. Diese sind an einer Formschließeinrichtung 44 üblicher Bauart angeordnet und werden jeweils bei Stillstand des Sägeblattes 10 und nach Schließen der Klemmeinrichtung 28 von je einer Seite her dicht an das Sägeblatt 10 angelegt.

Zum Zuführen von Stellit (oder anderem hartem Werkstoff) ist eine Zuführeinrichtung 46 von ebenfalls üblicher Bauart vorgesehen, die eine Zange 48 zum intermittierenden Vorschieben einer Werkstoffstange 50 aufweist. Jeweils bei Stillstand des Sägeblattes 10 steht das freie Ende der Werkstoffstange 50 senkrecht über dem Formhohlraum 40 im Wirkungsbereich einer Schmelzvorrichtung 52, die im dargestellten Beispiel von einem Plasmabrenner gebildet und an einem Ständer 54 einstellbar angeordnet ist.

Von dem erhitzten freien Ende der Werkstoffstange 50 tropft bei jedem Arbeitszyklus geschmolzener Werkstoff 56 in den Formhohlraum 40 und bildet dort an seiner freien Oberfläche eine Kalotte 58. Um diese mindestens annähernd parallel und in geringem Abstand zum vorgesehenen Verlauf des Zahnrückens 16 abzuplatten, ist eine Abstreifeinrichtung 60 vorgesehen.

Zur Abstreifeinrichtung 60 gehört eine hydraulische oder pneumatische Kolbenzylindereinheit mit einem Kolben 62, dessen Ausgangsstellung von einem einstellbaren Anschlag 64 bestimmt ist. Fig. 2 zeigt den Kolben 62 in seiner Endstellung. An seiner vom Anschlag 64 abgewandten Seite hat der Kolben 62 eine Kolbenstange 66, die sich ungefähr entgegen der Vorschubrichtung A des Sägeblattes 10 nach hinten erstreckt und durch ein Gelenk 68 mit einem parallel zur Vorschubrichtung A hinund herbewegbaren Schlitten 70 verbunden ist. Dieser ist zwischen zwei zum Sägeblatt 10 parallelen, im dargestellten Beispiel senkrechten, Platten 72 geführt, die in einer am Gestell 20 ortsfest angeordneten Halterung 74 auswechselbar befestigt sind und je eine bogenförmige Führung 76 aufweisen. Die beiden Führungen 76 sind deckungsgleiche, in die Platten 72 eingefräste und geschliffene Schlitze.

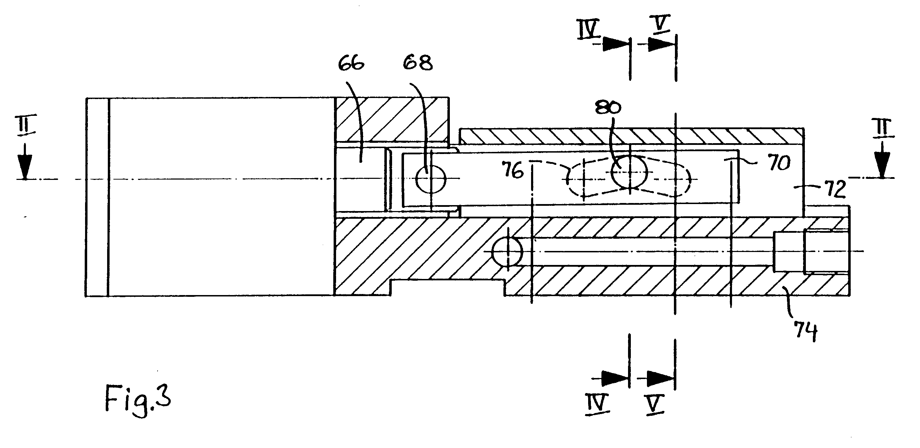

Der Schlitten 70 hat eine zur Ebene des Sägeblattes 10 normale, im dargestellten Beispiel waagerechte Bohrung, in der mittels einer Klemmschraube 78 ein Kurvenfolgeglied 80 befestigt ist. Dieses ist im dargestellten Beispiel ein gehärteter und geschliffener zylindrischer Bolzen, der sich durch die beiden Führungen 76 hindurcherstreckt. An einem Ende des Kurvenfolgegliedes 80 ist ein Preßwerkzeug 82 in Form einer Platte befestigt. Beim Ausfahren der Kolbenstange 66 gleitet das Kurvenfolgeglied 80 in den Führungen 76, in Fig. 1 bis 3 und 6 nach rechts, und dementsprechend bewegt sich das Preßwerkzeug 82 in Richtung des Pfeils C in Fig. 6 auf einer von unten her gesehen konkaven Bahn 84. Diese Bewegung, von der in Fig. 6 mehrere aufeinanderfolgende Stadien dargestellt sind, läuft stetig ab und führt dazu, daß das Preßwerkzeug 82 sich allmählich, mit seinem rechten Endbereich zuerst, auf die Kalotte 58 absenkt und den geschmolzenen Werkstoff 56 nach rechts, zur Zahnspitze 18 hin, verschiebt und überschüssigen Werkstoff abstreift.

Nach der Erfindung läßt man den im Formhohlraum 40 enthaltenen geschmolzenen Werkstoff 56 ohne Einwirkung der Abstreifeinrichtung 60, und somit unter Beibehaltung der Kalotte 58, im Formhohlraum 40 erstarren, was beim üblichen Kühlen der Formbacken 42 etwa 3 bis 5 s dauert. Während dieser Zeit wird die Schmelzvorrichtung 52 abgeschaltet oder vom Formhohlraum 40 weggerichtet. Erst nach dem Erstarren des Werkstoffs 56 wird die Schmelzeinrichtung 52 wieder gezündet oder, falls sie in Betrieb geblieben ist, erneut auf den Formhohlraum 40 gerichtet, so daß der Werkstoff 56 erneut schmilzt, und erst dann wird die Abstreifeinrichtung 60 in Gang gesetzt, so daß das Preßwerkzeug 82 die beschriebene Bewegung längs der Bahn 84 ausführt.

## Patentansprüche

1. Verfahren zum Aufbringen harten Werkstoffs auf Zähne (12) von Schneidwerkzeugen, insbesondere Sägeblättern (10), bei dem
- um einen Zahn (12) ein Formhohlraum (40) gebildet wird, in dem der geschmolzene Werkstoff (56) wegen seiner Oberflächenspannung eine Kalotte (58) bildet, und
- die Kalotte (58) mit einem Druck abgeflacht wird, der in Richtung auf die Zahnspitze (18) fortschreitend aufgebracht wird,
dadurch **gekennzeichnet**, daß
der geschmolzene Werkstoff (56) abgekühlt und anschließend erneut bis zum Erreichen eines mindestens annähernd flüssigen Zustandes erhitzt wird, ehe der Druck auf die Kalotte (58) aufgebracht wird.

2. Verfahren nach Anspruch 1,
dadurch **gekennzeichnet**, daß
der geschmolzene Werkstoff (56) im Formhohlraum (40) bleibt, bis er nach dem Abkühlen erneut erhitzt worden ist.

3. Vorrichtung zum Aufbringen harten Werkstoffs auf Zähne (12) von Schneidwerkzeugen, insbesondere Sägeblättern (10), und insbesondere zum Durchführen des Verfahrens nach Anspruch 1 oder 2, mit
- Formbacken (42), die an einen Zahn (12) anlegbar sind und einen Formhohlraum (40) bilden,
- einer Zuführeinrichtung (46) zum Zuführen des Werkstoffs,
- einer Schmelzvorrichtung (52) zum Schmelzen des Werkstoffs, so daß dieser im Formhohlraum (40) eine Kalotte bildet,
- und einem Preßwerkzeug (82) zum Ausüben eines Druckes auf die vom geschmolzenen Werkstoff (56) gebildete Kalotte (58),
dadurch **gekennzeichnet**, daß
das Preßwerkzeug (82) eine Platte ist, und Mittel vorhanden sind um diese Platte mindestens annähernd parallel zu sich selbst längs einer bogenförmigen, von der Kalotte (58) aus gesehen konkaven Bahn (84) in Richtung zur Zahnspitze (18), und über diese hinweg, zu bewegen.

4. Vorrichtung nach Anspruch 3,
dadurch **gekennzeichnet**, daß
das Preßwerkzeug (82) mit einem Kurvenfolgeglied (80) fest verbunden ist, das längs einer bogenförmigen Führung (76) hin- und herbewegbar ist.

## Claims

1. A method of applying hard material to cutting tool teeth (12), especially the teeth of saw blades (10), wherein
- a mold cavity (40) is defined around a tooth (12) and the molten material (56), due to its surface tension, forms a spherical segment (58) therein, and
- the spherical segment (58) is flattened under pressure applied progressively in a direction towards the tip (18) of the tooth,
**characterized** in that
the molten material (56) is cooled and subsequently heated again until it has reached a state which is at least approximately liquid before the pressure is applied to the spherical segment (58).

2. The method as claimed in claim 1,
**characterized** in that the molten material (56) remains in the mold cavity (40) until it has been reheated after the cooling.

3. An apparatus for applying hard material to cutting tool teeth (12), especially the teeth of saw blades (10), and especially for carrying out the method as claimed in claim 1 or 2, comprising
- mold jaws (42) adapted for engagement with a tooth (12) and defining a mold cavity (40),
- supply means (46) for supplying the material,
- a melting device (52) for melting the material, so that it forms a spherical segment in the mold cavity (40),
- and a pressing tool (82) to exert pressure on the spherical segment (58) formed of the molten material (56)
**characterized** in that
the pressing tool (82) is a plate and that means are provided to move said plate at least approximately parallel to itself in the direction of the tip (18) of the tooth, and beyond the same, along an arcuate path (84) which is concave as seen from the spherical segment (58).

4. The apparatus as claimed in claim 3,
**characterized** in that the pressing tool (82) is connected firmly to a cam follower (80) which is movable back and forth along an arcuate guide means (76).

## Revendications

1. Procédé pour appliquer un matériau dur sur les dents (12) d'outils coupants, en particulier de lames de scie (10) dans lequel
- une cavité de moulage (40) est formée autour d'une dent (12), dans laquelle le matériau fondu (56) forme une calotte (58) du fait de sa tension superficielle, et
- la calotte (58) est aplatie par une pression qui est appliquée progressivement dans la direction de la pointe de la dent (18),
caractérisé en ce que
le matériau fondu (56) est refroidi et ensuite réchauffé jusqu'à atteindre un état au moins approximativement liquide avant que la pression soit appliquée sur la calotte (58).

2. Procédé selon la revendication 1,
caractérisé en ce que
le matériau fondu (56) demeure dans la cavité de moulage (40) jusqu'à ce qu'il ait été réchauffé après son refroidissement.

3. Dispositif pour appliquer un matériau dur sur les dents (12) d'outils coupants, en particulier de lames de scie (10), et en particulier pour mettre en oeuvre le procédé selon la revendication 1 ou 2, comprenant
- des parois de moulage (42) qui peuvent être appliquées à une dent (12) et forment une cavité de moulage (40),
- un dispositif d'alimentation (46) pour l'alimentation en matériau,
- un dispositif de fusion (52) pour faire fondre le matériau de façon que celui-ci forme une calotte dans la cavité de moulage (40),
- et un outil de pression (82) pour exercer une pression sur la calotte (58) formée par le matériau fondu (56),
caractérisé en ce que
l'outil de pression (82) est une plaque et des moyens sont présents pour déplacer cette plaque au moins approximativement parallèlement à elle-même le long d'une trajectoire (84) arquée concave vue de la calotte (58) en direction de la pointe de la dent (18) et par-dessus celle-ci.

4. Dispositif selon la revendication 3,
caractérisé en ce que
l'outil de compression (82) est en liaison fixe avec un organe suiveur de courbe (80) qui se déplace dans les deux sens le long d'une glissière de guidage (76).
